# EUROPEAN PATENT APPLICATION

(11) **EP 3 078 885 A1**
(43) Date of publication of application: **12.10.2016**
(21) Application number: 14867242.1
(22) Date of filing: 26.11.2014
(51) Int. Cl.: F16J 15/32, F16F 9/36, F16J 15/16

(54) **TOOL DEVICE**

(30) Priority: 02.12.2013 JP 2013249079
(71) Applicant: KYB Corporation, Tokyo 105-6111 (JP)
(72) Inventor: OZAKI, Shinji, Tokyo 105-6111 (JP); KANI, Kiyoshi, Tokyo 105-6111 (JP); MAEDA, Hideto, Tokyo 105-6111 (JP)
(74) Representative: Grünecker Patent- und Rechtsanwälte PartG mbB
(86) International application number: PCT/JP2014/081272
(87) International publication number: WO 2015/083593

(57) **Abstract**

A seal device includes an annular seal main body; a lip part that has a main lip and a sub lip, the main lip and the sub lip being provided so as to be aligned in an axial direction on the inside of the seal main body; and an annular biasing member provided on an outer periphery of the lip part, the annular biasing member being configured to press both the main lip and the sub lip to a member from the outer periphery in a radial direction, wherein the biasing member has a length in the axial direction such that the biasing member is configured to press both a distal end site of the main lip and a distal end site of the sub lip from the outer periphery in the radial direction.

## Description

### TECHNICAL FIELD

The present invention relates to a biasing member of a seal device.

### BACKGROUND ART

Various devices are conventionally known as seal devices that are inserted into an outer tube and seal the outer periphery of a member which moves in an axial direction relative to the outer tube. For example, JP2001-165326A discloses a seal device used in a shock absorber, wherein the seal device seals the outer periphery of a shaft which is the member to be sealed. In detail, the seal device is annular shaped, and has a main lip and a sub lip on its inner periphery. This seal device seals the outer periphery of the shaft by slidingly contacting the inner peripheral main lip and the sub lip to the outer periphery of the shaft.

The seal device has the main lip and the sub lip vertically in the axial direction, and the main lip and the sub lip slidingly contact the outer periphery of the shaft to scrape off oil that has adhered to the outer periphery of the shaft. Thereby, oil does not leak to the outside of the shock absorber.

Further, in order to improve the shaft followability of the main lip and the sub lip, the main lip and the sub lip are pressed to the shaft using a garter spring with an approximately perfect circle cross-section that is provided on the rear surface of the main lip and sub lip. Thereby, the sealing performance is improved.

### SUMMARY OF INVENTION

However, the garter spring with an approximately perfect circle cross-section in the above-described conventional seal device is disposed so as to act on both the main lip and the sub lip, and thus the garter spring cannot press both the distal end on the inner periphery of the main lip and the distal end on the inner periphery of the sub lip from the outer periphery.

In other words, the main lip and the sub lip cannot both be uniformly pressed from the outer periphery in the radial direction by the garter spring. Thus, there has been a problem in that deviations occur in the pressing force, which leads to instability in the behavior of the main lip and the sub lip and poor following relative to the shaft. Therefore, there is a need to improve the sealing performance of such a seal device.

An object of the present invention is to provide a seal device that is capable of improving the sealing performance.

A seal device includes an annular seal main body; a lip part that has a main lip and a sub lip provided aligned in an axial direction on the inside of the seal main body; and an annular biasing member that is provided on an outer periphery of the lip part, and presses both the main lip and the sub lip to a member from the outer periphery in a radial direction, wherein the biasing member is a garter spring, and has a length in the axial direction such that the biasing member is configured to press both a distal end site of the main lip and a distal end site of the sub lip from the outer periphery in the radial direction.

### BRIEF DESCRIPTION OF DRAWINGS

FIG. 1 is an enlarged cross-section view of a portion of a seal device according to an embodiment of the present invention;
FIG. 2 is an enlarged cross-section view of a portion of a seal device according to another embodiment of the present invention;
FIG. 3 is a cross-section view of a shock absorber equipped with a seal device according to an embodiment of the present invention; and
FIG. 4 is an enlarged cross-section view of a portion of a seal device serving as a comparative embodiment.

### DESCRIPTION OF EMBODIMENTS

A seal device S of an embodiment of the present invention will now be explained with reference to the attached drawings. Among the illustrated members, those which are assigned the same reference numeral across several of the drawings indicate the same member.

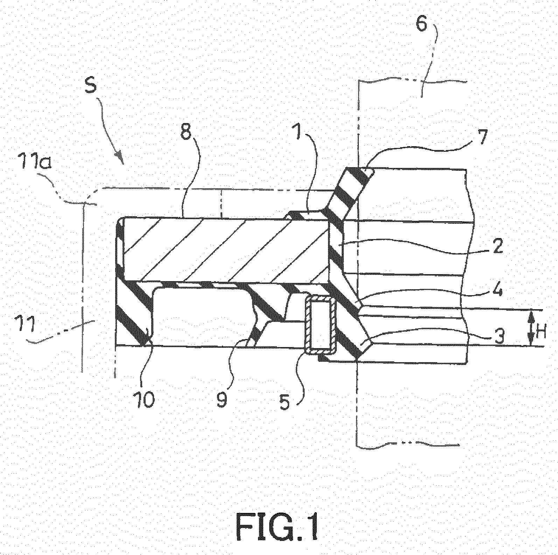

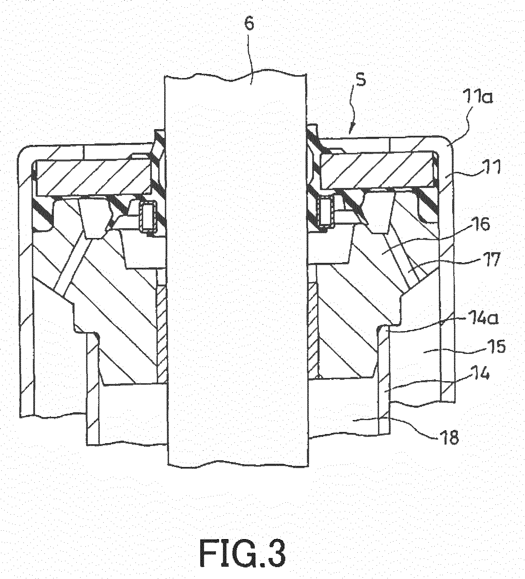

FIGS. 1, 2, and 4 illustrate a rod as a virtual line. When a rod is actually inserted into the seal device S, the main lip and the sub lip are closely fitted to the rod as shown in FIG. 3.

In this embodiment, the seal device S is used in a shock absorber. The seal device S is an oil seal that seals the outer periphery of a rod 6, which serves as a member to be sealed.

As shown in FIG. 3, the shock absorber includes a cylinder 14, an outer tube 11 that is disposed on the outside of the cylinder 14 and covers the cylinder 14, an annular rod guide 16 that is disposed above the cylinder 14 and blocks an opening end 14a of the cylinder 14 and an opening end 11a of the outer tube 11, the rod 6 which serves as a member to be sealed and penetrates the rod guide 16, and the annular seal device S that is stacked on the rod guide 16 and seals the outer periphery of the rod 6. Although not illustrated, a piston that is connected to a lower end (not illustrated) of the rod 6 is slidingly inserted into the bottom of the cylinder 14. The piston partitions a rod-side chamber 18 and a piston-side chamber (not illustrated), which are filled with liquid, within the cylinder 14. In addition, a reservoir 15 that is filled with gas and a working oil is formed between the cylinder 14 and the outer tube 11.

Next, the seal device S will be explained. As shown in FIG. 1, the seal device S includes a rubber seal main body 1 and a garter spring 5. The seal main body 1 has a lip part 2 consisting of a main lip 3 and a sub lip 4 which are formed annularly and are provided aligned in the axial direction on a lower part in the axial direction of the inner periphery of the seal main body 1. The garter spring 5 serves as a biasing member, and is provided on the outer periphery in the radial direction of the lip part 2 of the seal main body 1.

In the present embodiment, in order to seal between the rod 6 and the outer tube 11 of the shock absorber, the seal main body 1 has the lip part 2 that is annular and provided on the inner periphery, a dust seal 7 that is provided on the inner periphery above the lip part 2 in FIG. 1, an outer peripheral lip 10 provided on the outer periphery, and a check seal 9 provided on a bottom surface.

The seal device S also has an annular insert metal 8. The seal main body 1 and the insert metal 8 are integrated by fusing or welding the seal main body 1 to the insert metal 8.

The seal device S having the insert metal 8 is stacked onto the rod guide 16 and accommodated within the outer tube 11. By caulking the top end opening end 11a of the outer tube 11 from the outside, the seal device S is flexed between the rod guide 16 and the outer tube 11. By providing the seal main body 1 to the insert metal 8, the seal device S can be attached to the shock absorber by a caulking process of the outer tube 11.

When the seal device S is attached to the shock absorber, the main lip 3 and the sub lip 4 of the lip part 2 of the seal device S are closely fitted by tensional force to the outer periphery of the rod 6 to seal the outer periphery of the rod 6. Further, the outer peripheral lip 10 provided on the outer periphery of the seal main body 1 is closely fitted to the inner periphery of the outer tube 11 and the outer periphery of the rod guide 16 to seal between the outer tube 11 and the rod guide 16.

Therefore, the seal device S seals between the rod 6 and the outer tube 11 and between the outer tube 11 and the rod guide 16, so as to inhibit working oil and gas from flowing to the outside of the shock absorber from the cylinder 14 and the reservoir 15.

In addition, the seal device S has the dust seal 7. The dust seal 7 slidingly contacts the outer periphery of the rod 6 to inhibit foreign substances such as water or dust that have adhered to the outer periphery of the rod 6 from infiltrating into the shock absorber.

The seal main body 1 has the annular check seal 9 which contacts an upper surface of the rod guide 16. The check seal 9 can separate from the rod guide 16 by deflection due to the action of a pressure from the inner peripheral side.

If working oil that has passed through a gap for sliding movement between the rod guide 16 and the rod 6 accumulates in a space formed on a rear surface-side of the lip part 2 leading to an increase in pressure, the check seal 9 deflects to allow the working oil to escape from the space. The working oil that has passed through the check seal 9 is discharged to the reservoir 15 via a passage 17 provided to the rod guide 16.

As explained above, the main lip 3 and the sub lip 4 slidingly contact the rod 6. Thereby, when the rod 6 moves in the axial direction relative to the outer tube 11, the main lip 3 and the sub lip 4 scrape off working oil that has adhered to the outer periphery of the rod 6 so that the working oil does not leak to the outside of the outer tube 11.

In more detail, first, working oil that has adhered to the outer periphery of the rod 6 is scraped off by the main lip 3. At this time, even if all of the working oil is not scraped off, the remaining working oil is scraped off by the sub lip 4. Thus, the working oil does not leak to the outside of the shock absorber.

In the present embodiment, the garter spring 5 is provided on the outer periphery of the lip part 2 to press the main lip 3 and the sub lip 4 from the outer periphery side so that the tensional force which clamps the rod 6 with the main lip 3 and the sub lip 4 can be maintained.

As shown in FIG. 1, the garter spring 5 is formed with a rectangular cross-section shape. The axial direction length of the garter spring 5 is longer than a length H from the distal end of the main lip 3, i.e. a distal end site where the inner diameter reaches a minimum, to the distal end of the sub lip 4, i.e. a distal end site where the inner diameter reaches a minimum. Thereby, the garter spring 5 can press both the main lip 3 and the sub lip 4 from the outer periphery in the radial direction.

Due to this configuration, in the seal device S of the present embodiment, both the main lip 3 and the sub lip 4 exert a uniform tensional force on the rod 6. Thereby, the seal device S can improve the followability of the main lip 3 and the sub lip 4 to the rod 6, and stabilize the behavior of the main lip 3 and the sub lip 4. Thus, the sealing performance can be improved, and the outer periphery of the rod 6 can be reliably sealed.

Since the garter spring 5 is provided on the outer periphery of the main lip 3 and the sub lip 4, there are restrictions on the installation space in a double cylinder-type shock absorber.

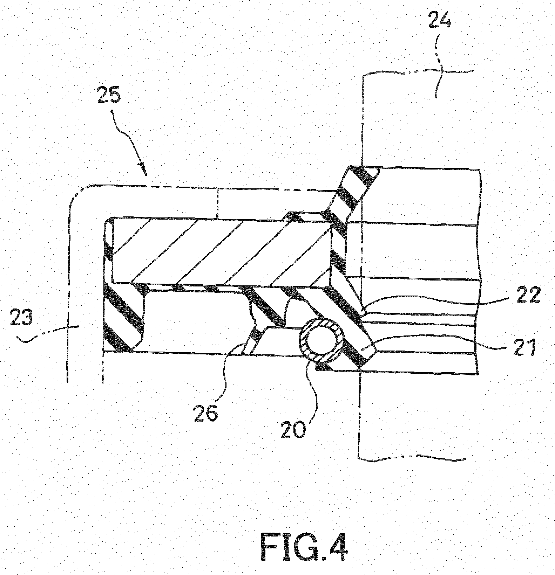

Herein, a seal device 25 is illustrated in FIG. 4 as a comparative embodiment. The seal device 25 is annular, is stacked on a rod guide (not illustrated) that supports a rod 24, and is fixed to an outer tube 23. The seal device 25 has a main lip 21 and a sub lip 22 vertically in the axial direction on the inner periphery thereof. In the seal device 25, the inner peripheral main lip 21 and sub lip 22 are slidingly contacted to the outer periphery of the rod 24 to seal the outer periphery of the rod 24.

The seal device 25 has the main lip 21 and the sub lip 22 vertically in the axial direction, and the main lip 21 and the sub lip 22 slidingly contact the outer periphery of the rod 24 to scrape off oil that has adhered to the outer periphery of the rod 24. Thereby, oil does not leak to the outside of the shock absorber.

Further, in the seal device 25, in order to improve the followability of the main lip 21 and the sub lip 22 to the rod 24, the main lip 21 and the sub lip 22 are pressed to the rod 24 using a garter spring 20 with an approximately perfect circle cross-section that is provided on the outer periphery in the radial direction of the main lip 21 and the sub lip 22. Thereby, the sealing performance is improved.

The garter spring 20 shown in FIG. 4 has an approximately perfect circle cross-section shape. Therefore, the radial direction length of the perfect circle of the garter spring 20 increases in accordance with an increase in the axial direction length of the perfect circle. However, the garter spring 20 interferes with a check seal 26 when the radial direction length increases. Therefore, due to space restrictions, the axial direction length of the garter spring 20 could not be made longer than a length from the distal end of the main lip 21, i.e. a distal end site where the inner diameter reaches a minimum, to the distal end of the sub lip 22, i.e. a distal end site where the inner diameter reaches a minimum.

In contrast, in the present embodiment, the cross-section shape of the garter spring 5 is rectangular as described above. Thereby, even if the axial direction length of the garter spring 20 is made to be longer than the length H from the distal end of the main lip 3, i.e. a distal end site where the inner diameter reaches a minimum, to the distal end of the sub lip 4, i.e. a distal end site where the inner diameter reaches a minimum, the radial direction length can be shortened compared to the axial direction length. Thus, the garter spring 5 can be provided on the outer periphery of the main lip 3 and the sub lip 4 without any fears of the garter spring 5 interfering with the check seal 9.

Basically, since the cross-section shape of the garter spring 5 is a rectangle shape in which the axial direction length is longer than the radial direction length, the garter spring 5 can be provided in a small space compared to the case in which the cross-section shape is a perfect circle.

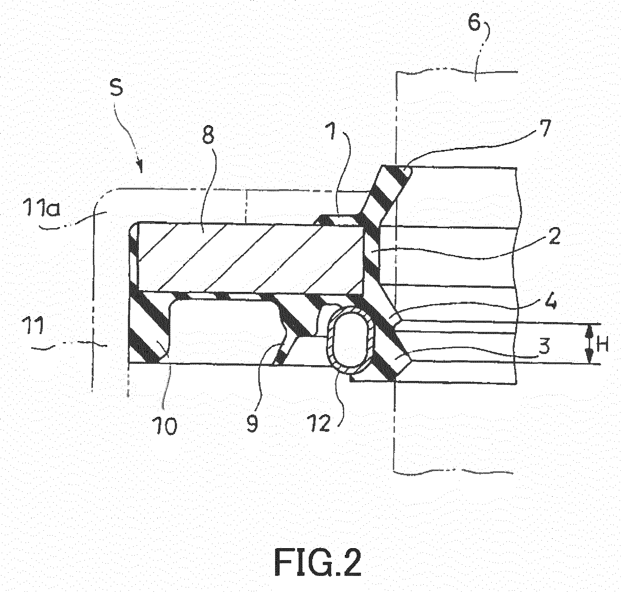

Of course, the cross-section shape of the garter spring 5 is not limited to a rectangle. As long as the axial direction length is longer than the length H from the distal end of the main lip 3 to the distal end of the sub lip 4, and the radial direction length does not interfere with the check seal 9, the cross-section shape of the garter spring 5 can be another shape such as an elliptical shape 12 as shown in FIG. 2.

As long as the garter spring 5 does not interfere with other members, the cross-section shape is not limited to the rectangle shape and elliptical shape described above, and can be any shape.

Further, the constitution of the garter spring 5 is not limited to an oil seal, and can also be used for the dust seal 7.

Of course, the seal device S of the present embodiment can also be used as a seal device provided between an outer tube and an inner tube of a front fork used in a vehicle or the like.

Embodiments of this invention were described above, but the above embodiments are merely examples of applications of this invention, and the technical scope of this invention is not limited to the specific constitutions of the above embodiments.

This application claims priority based on Japanese Patent Application No.2013-249079 filed with the Japan Patent Office on December 2, 2013, the entire contents of which are incorporated into this specification.

## Claims

1. A seal device, comprising:
an annular seal main body;
a lip part that has a main lip and a sub lip, the main lip and the sub lip being provided so as to be aligned in an axial direction on the inside of the seal main body; and
an annular biasing member provided on an outer periphery of the lip part, the annular biasing member being configured to press both the main lip and the sub lip to a member to be sealed from the outer periphery in a radial direction,
wherein the biasing member has a length in the axial direction such that the biasing member is configured to press both a distal end site of the main lip and a distal end site of the sub lip from the outer periphery in the radial direction.

2. A seal device according to claim 1, wherein the length in the axial direction of the biasing member is longer than a length from the distal end site of the main lip to the distal end site of the sub lip.

3. A seal device according to claim 1, wherein the seal device is an oil seal, and a cross-section shape of the biasing member is a rectangular shape or an elliptical shape.
